Europäisches Patentamt

European Patent Office

Office européen des brevets

(19)

(11) Veröffentlichungsnummer : **0 111 155**
**B1**

# (12) EUROPÄISCHE PATENTSCHRIFT

(45) Veröffentlichungstag der Patentschrift :
25.03.87

(21) Anmeldenummer : 83110991.3

(22) Anmeldetag : 03.11.83

(51) Int. Cl.⁴ : **E 05 D 15/06, F 16 C 29/04**

(54) **Rollenlager für eine in einer Schiene hängend geführte Schiebetür.**

(30) Priorität : 06.11.82 DE 8231092 U

(43) Veröffentlichungstag der Anmeldung :
20.06.84 Patentblatt 84/25

(45) Bekanntmachung des Hinweises auf die Patenterteilung : 25.03.87 Patentblatt 87/13

(84) Benannte Vertragsstaaten :
AT CH FR GB LI

(56) Entgegenhaltungen :
DE-A- 2 212 627
DE-B- 2 704 012
DE-U- 7 837 026
US-A- 3 613 313
US-A- 3 774 342

(73) Patentinhaber : **ONI-Metallwarenfabriken
Industriegelände Hollwiesen
D-4973 Vlotho (DE)**

(72) Erfinder : **Oepping, Reinhard
Weststrasse 34
D-4983 Kirchlengern 1 (DE)**

(74) Vertreter : **Stracke, Alexander, Dipl.-Ing. et al
Patentanwälte Dipl.-Ing. Loesenbeck Dipl.-Ing.
Stracke Jöllenbecker Strasse 164 Postfach 5605
D-4800 Bielefeld 1 (DE)**

## Beschreibung

Die Erfindung bezieht sich auf ein Rollenlager für eine in einer Schiene hängend geführte Schiebetür, vorzugsweise für eine eine Duschabtrennung bildende Schiebetür, bei dem die Rolle auf einem exzentrisch an einer runden Scheibe angeordneten Zapfen und die Scheibe in einer runden Aufnahme eines Lagerbocks drehbar gelagert sind.

Es ist ein Rollenlager dieser Art bekannt (DE-B 2 704 012), bei dem vor der Verstellung des Exzenterzapfens und damit der Höhenlage der Rolle eine Kontermutter gelöst werden muß, die auf den den Exzenterzapfen tragenden Bolzen geschraubt ist. Hierbei besteht die Gefahr, daß unter dem Gewicht der Schiebetür der Bolzen sich in der Aufnahmebohrung des Lagerbocks dreht und die Schiebetür nach unten sackt. Bei dieser Ausführung werden zwei Mann benötigt, um die Höhenlage der Schiebetür einzustellen, nämlicher einer, der die Schiebetür hält und einer, der die Verstellung vornimmt.

Es ist ferner ein Laufwerk für eine Schiebetür oder ein Schiebefenster bekannt (DE-A-2 212 627, Fig. 2), bei dem die verstellbare Rolle in einem Schwingenrahmen gelagert ist, der mittels einer Stellschraube um eine Horizontalachse verstellt werden kann. Eine einwandfreie Funktion der Höhenverstellvorrichtung ist in den Endbereichen nicht gewährleistet, da sich bei der Annäherung an diese Endbereiche der Schwingenrahmen von der Stellschraube aufgrund der Drehung um die Horizontalachse wegbewegt.

Es ist ferner ein Rollenlager für eine an einer Schiene hängend geführte Schiebetür bekannt (DE-U-7 837 026), bei dem die Rolle auf einem an der Stirnseite eines Tragbolzens vorgesehenen Exzenterzapfen drehbar gelagert ist. Der Tragbolzen ist in einem Lagerbock mittels einer Schraube eingespannt, die gleichzeitig als Befestigungsschraube dient und mit ihrem Gewindeschaft in eine Gewindebohrung einer Befestigungsplatte eingreift, die in eine Nut des Rahmenprofils der Schiebetür eingeschoben ist. Sofern die Spannschraube gelöst wird, um die Lage des Exzenterzapfens zu verstellen, wird die Verstellbewegung ohne eine Sicherung gegenüber dem Türgewicht durchgeführt, so daß sich vor dem Anziehen der Spannschraube eine unbeabsichtigte Verstellung ergeben kann.

Der Erfindung liegt die Aufgabe zugrunde, ein Rollenlager der eingangs genannten Art so zu gestalten, daß die Rolle mit konstruktiv einfachen Mitteln in der Höhenlage in bezug auf den Lagerbock und damit die Höhenlage des Schiebeflügels veränderbar und eine einwandfreie Funktion der Höhenverstellvorrichtung über den gesamten Verstellbereich gewährleistet ist.

Diese Aufgabe wird nach der Erfindung durch die im kennzeichnenden Teil des Patentanspruches 1 genannten Merkmale gelöst.·

Bei einer vorteilhaften Ausführungsform der Erfindung ist die Scheibe im Durchmesser abgesetzt. Der den Zapfen tragende Teil weist einen kleineren Durchmesser auf als der mit der Ringnut versehene Teil.

Die Ringnut ist nicht mit einem Schneckengewinde ausgerüstet. Die Schnecke und die Scheibe sind zueinander so angeordnet, daß die Schnecke mit ihren Gewindegängen sich in den Boden und ggf. teilweise in die Seitenwände der Ringnut eingräbt und die Möglichkeit gegeben ist, durch eine Verdrehung der Schnecke die Scheibe und damit den exzentrisch angeordneten Zapfen zu verdrehen, auf dem die Rolle drehbar gelagert ist. Dadurch, daß mittels der Schnecke in die im Lagerbock drehbar gelagerte Scheibe Schneckengänge eingeformt werden, bildet die vorzugsweise aus Kunststoff einstückig mit dem Zapfen gefertigte Scheibe ein einfaches Formteil, das preisgünstig herzustellen ist.

Ein Ausführungsbeispiel der Erfindung ist in der Zeichnung dargestellt und wird im folgenden beschrieben. Es zeigen :

Figur 1   im Vertikalschnitt die Kopfschiene eines feststehenden Rahmens einer Schiebetür, in der drei Schiebeflügel hängend geführt werden,

Figur 2   in vergrößertem Maßstab ein Rollenlager im Aufriß,

Figur 3   eine Ansicht in Richtung des Pfeiles III in Fig. 2,

Figur 4   einen Schnitt nach der Linie IV-IV in Fig. 3 und

Figur 5   einen Schnitt nach der Linie V-V in Fig. 2.

Das Rollenlager 1 weist eine Rolle 2 auf, die auf einem Zapfen 3 drehbar gelagert ist. Dieser aus Kunststoff gefertigte Zapfen ist im dargestellten Ausführungsbeispiel einstückig mit einer runden Scheibe 4, die in einer entsprechenden Aufnahme eines Lagerbocks 5 drehbar gelagert ist. Der Zapfen 3 ist, wie sich aus der Fig. 4 ergibt, exzentrisch an der Scheibe 4 bzw. an einem Teil 6 der Scheibe angeordnet, der einen kleineren Durchmesser aufweist als der übrige Teil 7 der Scheibe. Der Teil 7 ist mit einer Ringnut 8 ausgerüstet, die im Querschnitt eine bogenförmige Kontur aufweist und von der teilweise eine Schnecke 9 aufgenommen wird. Die Schnecke ist in einem Kanal 10 des Lagerbocks 5 drehbar gelagert, der sich tangential zur Scheibe 4 erstreckt. Die Schnecke weist an einem Ende einen Kopf 11 auf, der in dem Ausführungsbeispiel mit einem Kreuzschlitz zur Aufnahme eines Betätigungswerkzeuges ausgerüstet ist. Dieser Kopf 11 ist in einer Aufnahme 12 des Lagerbocks 5 angeordnet, während am anderen Ende des Kanals 10 eine Aufnahme 13 für eine Wellensicherung 14 vorgesehen ist, die auf das dem Kopf 11 abgewandte Ende aufgesetzt ist, das nicht mit einem Schneckengewinde versehen ist.

Aus der Fig. 5 ergibt sich, daß die Schneckengänge der Schnecke 9 sich im Bereich der Ringnut 8 in die Scheibe 4 eingraben und somit Gewindegänge einformen, so daß durch Verstellen der Schnecke die Scheibe 4 verdreht und die Rolle 2 in ihrer Höhenlage verstellt werden kann.

Die Verstellbarkeit der exzentrisch gelagerten Rolle 2 ist in der Fig. 3 durch strichpunktierte Linien angedeutet.

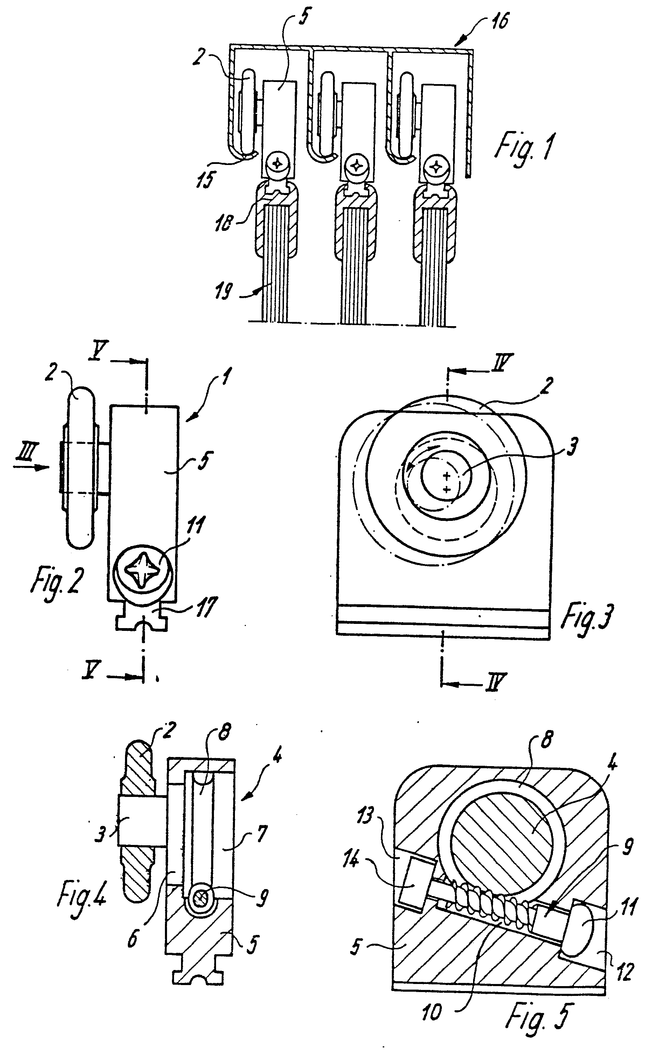

Die Rollen 2 laufen, wie sich aus der Fig. 1 ergibt, in einer Führungsbahn 15 einer Kopfschiene 16 eines feststehenden Rahmens der Schiebetür.

Der Lagerbock 5 ist mit einem Verankerungsfuß 17 ausgerüstet, der in eine entsprechende Nut eines oberen horizontalen Rahmenholms 18 eines Schiebeflügels 19 eingesetzt wird.

Aus der Fig. 1 ergibt sich, daß der Kopf 11 der Schnecke leicht zugänglich ist, um die Verstellung der Rolle 2 vorzunehmen.

## Patentansprüche

1. Rollenlager für eine in einer Schiene hängend geführte Schiebetür, vorzugsweise für eine eine Duschabtrennung bildende Schiebetür, bei dem die Rolle (2) auf einem exzentrisch an einer runden Scheibe (4) angeordneten Zapfen (3) und die Scheibe (4) in einer runden Aufnahme eines Lagerbocks (5) drehbar gelagert ist, dadurch gekennzeichnet, daß die Scheibe (4) mit einer in einem tangential zur Scheibe sich erstreckenden Kanal (10) des Lagerbocks drehbar gelagerten Schnecke (9) im Eingriff ist, die Scheibe eine Ringnut (8) mit bogenförmiger Querschnittskontur zur teilweisen Aufnahme der Schnecke (9) und die Schnecke (9) an einem Ende einen mit einem Schlitz zum Einführen eines Betätigungswerkzeuges ausgerüsteten Kopf (11) und ein vom Schneckengewinde freies, mit einer Wellensicherung (14) versehenes Ende aufweist, und der Kanal (10) am vorderen und am hinteren Ende mit Aufnahmen (12, 13) für den Kopf (11) der Schnecke und für die Wellensicherung (14) ausgerüstet ist.

2. Rollenlager nach Anspruch 1, dadurch gekennzeichnet, daß die Scheibe (4) im Durchmesser abgesetzt ist und der den Zapfen (3) tragende Teil (6) einen kleineren Durchmesser aufweist als der mit der Ringnut (8) versehene Teil (7).

## Claims

1. A roller mounting for a sliding door which is guided hanging in a rail, preferably for a sliding door which forms a shower partition, wherein the roller (2) ist rotatably mounted on a journal (3) arranged eccentrically on a round disc (4) and the disc (4) is rotatably mounted in a round mounting in a mounting block (5) characterised in that the disc (4) is in engagement with a worm (9) rotatably mounted in a passage (10) which extends in the mounting block tangentially with respect to the disc, the disc has an annular groove (8) of arcuate cross-sectional contour for partially receiving the worm (9) and at one end the worm (9) has a head (11) provided with a slot for insertion therein of an actuating tool, and an end which is free of the worm thread and which is provided with a shaft securing means (14), and the passage (10) is provided at the front and rear ends with receiving means (12, 13) for receiving the head (11) of the worm and the shaft securing means (14).

2. A roller mounting according to claim 1 characterised in that the disc (4) is stepped in diameter and the part (6) which carries the journal (3) is smaller in diameter than the part (7) which is provided with the annular groove (8).

## Revendications

1. Support à galets pour une porte coulissante suspendue et guidée par un rail, de préférence pour une porte coulissante formant une cloison de séparation de douche, dans lequel le galet (2) est monté de façon rotative sur un tourillon (3) disposé excentriquement sur un disque rond (4) et le disque (4) est monté de façon rotative dans un évidement de forme ronde d'un palier (5), caractérisé en ce que le disque (4) est en prise avec une vis sans fin (9) montée de façon rotative dans un canal (10) du palier qui s'étend tangentiellement au disque, le disque comprend une gorge annulaire (8) de section transversale courbe en vue de la réception partielle de la vis sans fin (9) et la vis sans fin (9) comprend, à une extrémité, une tête (11) équipée d'une fente en vue de l'introduction d'un outil de réglage et une extrémité ne comportant pas de filetage sans fin et munie d'un élément de retenue d'arbre (14), et le canal (10) est équipé à l'extrémité avant et à l'extrémité arrière d'évidements (12, 13) destinés à la tête (11) de la vis sans fin et à l'élément de retenue d'arbre (14).

2. Support à galets selon la revendication 1, caractérisé en ce que le disque (4) est étagé en diamètre et en ce que la partie (6) qui supporte le tourillon (3) a un diamètre plus petit que la partie (7) munie de la gorge annulaire (8).

0 111 155

Fig. 1

Fig. 2

Fig. 3

Fig. 4

Fig. 5